# EUROPÄISCHE PATENTANMELDUNG

(11) **EP 3 153 466 A1**
(43) Veröffentlichungstag der Anmeldung: **12.04.2017**
(21) Anmeldenummer: 16002038.4
(22) Anmeldetag: 20.09.2016
(51) Int. Cl.: C01B 3/38, B01J 8/06

(54) **INDUKTIVES HEIZEN EINES DAMPFREFORMEROFENS**

(30) Priorität: 08.10.2015 DE 102015013071
(71) Anmelder: Linde Aktiengesellschaft, 80331 München (DE)
(72) Erfinder: Mihailowitsch, Dieter, 82538 Geretsried (DE)
(74) Vertreter: Fischer, Werner

(57) **Zusammenfassung**

Die Erfindung betrifft einen Ofen zur Dampfreformierung eines kohlenwasserstoffhaltigen Einsatzstromes (E), der insbesondere Methan aufweist, mit: einer Brennkammer (10), zumindest einem Reaktorrohr (20), das sich abschnittsweise in der Brennkammer (10) erstreckt und zur Aufnahme eines Katalysators (K) sowie zum Durchführen des Einsatzstromes (E) ausgebildet ist, zumindest einem Brenner (30), der dazu ausgebildet ist, zum Beheizen des mindestens einen Reaktorrohrs (20) einen Brennstoff in der Brennkammer (10) zu verbrennen. Erfindungsgemäß ist vorgesehen, dass das mindestens eine Reaktorrohr (20) einen oberhalb sowie außerhalb der Brennkammer (10) verlaufenden Rohrabschnitt (20a) aufweist, wobei an dem Rohrabschnitt (20a) ein Induktor (23) angeordnet ist, der dazu ausgebildet ist, den Rohrabschnitt (20a) induktiv zu beheizen. Weiterhin betrifft die Erfindung ein entsprechendes Verfahren.

## Beschreibung

Die Erfindung betrifft einen Ofen, z.B. zur Durchführung einer Dampfreformation eines kohlenwasserstoffhaltigen Einsatzgasstromes, sowie ein entsprechendes Verfahren.

Die Dampfreformierung, insbesondere von Methan, ist eine weit verbreitete und etablierte Technologie zur Herstellung von Synthesegas. Auch aktuell wird die Dampfreformierung insbesondere zur Herstellung von Wasserstoff anderen Verfahren vorgezogen.

Bei der Dampfreformierung handelt es sich um eine allotherme Reaktion, die z.B. im Falle von Erdgas bzw. Methan als Einsatz gemäß der folgenden Reaktionsgleichung in Gegenwart eines geeigneten Katalysators abläuft:

CH₄ + H₂O → CO + 3 H₂.

Zur Durchführung wird vorzugsweise heißer Wasserdampf mit dem zu reformierenden Einsatz (zum Beispiel Erdgas bzw. Methan) vermischt und unter ständiger Energiezufuhr, die durch Verbrennen eines Brennstoffes bereitgestellt wird, in Gegenwart des Katalysators in der Gasphase zu Synthesegas bzw. Wasserstoff umgesetzt.

Hiervon ausgehend liegt der Erfindung die Aufgabe zugrunde, eine verbesserte Einrichtung bzw. ein verbessertes Verfahren zur Erzeugung von Synthesegas, insbesondere Wasserstoff, zur Verfügung zu stellen.

Diese Aufgabe wird durch einen Ofen mit den Merkmalen des Anspruchs 1 gelöst. Vorteilhafte Ausgestaltungen der Erfindung sind in den zugehörigen Unteransprüchen angegeben und werden nachfolgend beschrieben.

Gemäß Anspruch 1 ist danach erfindungsgemäß ein Ofen zur Dampfreformierung eines kohlenwasserstoffhaltigen Einsatzes, der insbesondere Methan aufweist, vorgesehen, wobei der Ofen aufweist:
- eine Brennkammer,
- zumindest ein Reaktorrohr, das sich abschnittsweise in der Brennkammer erstreckt und zur Aufnahme eines Katalysators sowie zum Durchführen des Einsatzstromes ausgebildet ist,
- zumindest einen Brenner, der dazu ausgebildet ist, zum Beheizen des mindestens einen Reaktorrohrs einen Brennstoff in der Brennkammer zu verbrennen, wobei
das mindestens eine Reaktorrohr einen oberhalb sowie außerhalb der Brennkammer verlaufenden Rohrabschnitt aufweist, wobei an dem Rohrabschnitt ein Induktor angeordnet ist, der dazu ausgebildet ist, den Rohrabschnitt induktiv zu heizen. D.h., der Induktor ist dazu ausgebildet, ein magnetisches Wechselfeld zu erzeugen, das in dem Material des Rohrabschnitts Wirbelströme induziert, die zur Erwärmung des Rohrabschnitts führen.

Das mindestens eine Reaktorrohr kann also mit anderen Worten durch eine obere (insbesondere horizontal) verlaufende Wandung der Brennkammer aus der Brennkammer herausgeführt sein, so dass sich oberhalb sowie außerhalb der Brennkammer jener Rohrabschnitt des mindestens einen Reaktorrohrs erstreckt.

Mit Vorteil entstehen im Vergleich zur Widerstandsheizung von Reaktorrohren keinerlei Probleme mit der galvanischen Entkopplung der Reaktorrohre vom Rest der Konstruktion.

Grundsätzlich kann der Ofen natürlich mehrere Reaktorrohre mit entsprechenden oberhalb und außerhalb der Brennkammer angeordneten Rohrabschnitten aufweisen, an denen jeweils ein Induktor angeordnet ist.

Die Erfindung nutzt also insbesondere zur Synthesegas- bzw. Wasserstoffherstellung die etablierte Technologie der Dampfreformierung, wobei aufgrund der erfindungsgemäßen technischen Lehre die vorteilhafte Möglichkeit besteht, z.B. bei Vorhandensein von überschüssiger oder preiswerter elektrischer Energie zumindest einen Teil des Brennstoffs einzusparen und die Erwärmung des Einsatzstromes durch induktives Heizen der Reaktorrohre zu unterstützen bzw. temporär zu ersetzen. Gemäß einer bevorzugten Ausführungsform des erfindungsgemäßen Ofens ist der Brenner bzw. eine Mehrzahl an Brennern an einer oberen Wandung der Brennkammer angeordnet, die die Brennkammer nach oben begrenzt, wobei die Brenner bevorzugt dazu konfiguriert sind nach unten in die Brennkammer zu feuern. Alternativ hierzu können die Brenner auch an den Seiten der Brennkammer oder unten in der Brennkammer (z.B. an einem Boden der Brennkammer) angeordnet sein.

Weiterhin ist gemäß einer bevorzugten Ausführungsform des erfindungsgemäßen Ofens vorgesehen, dass das mindestens eine Reaktorrohr bzw. die mehreren Reaktorrohre in einen Sammler münden, über den ein Rohprodukt- bzw. Rohsynthesegasstrom einer in dem Reaktorrohr bzw. in den Reaktorrohren in Gegenwart eines geeigneten Katalysators stattfindenden Dampfreformation aus dem bzw. den Reaktorrohren abziehbar ist.

Das mindestens eine Reaktorrohr erstreckt sich vorzugsweise entlang einer Längs- bzw. Zylinderachse, die parallel zur Vertikalen verläuft. Sind mehrere Reaktorrohre vorgesehen, so erstrecken sie sich vorzugsweise parallel zueinander entlang je einer Längs bzw. Zylinderachse, die jeweils parallel zur Vertikalen verläuft.

Der bzw. die besagten Rohrabschnitte erstrecken sich dabei vorzugsweise bezogen auf diese Längsachse(n) bzw. Vertikale oberhalb sowie außerhalb der Brennkammer.

Der Sammler ist bezogen auf die Vertikale unterhalb sowie außerhalb (oder alternativ innerhalb) der Brennkammer angeordnet und erstreckt sich bevorzugt quer zu dem mindestens einen Reaktorrohr bzw. entlang der Horizontalen.

Bei unten in der Brennkammer angeordneten Brennern (siehe oben) kann der Sammler ferner oberhalb der Brennkammer angeordnet sein.

Das mindestens eine Reaktorrohr und/oder der Sammler können zumindest abschnittsweise hohlzylindrisch, insbesondere hohlkreiszylindrisch, ausgebildet sein. Andere Querschnittsformen sind auch denkbar. Weiterhin besteht das mindestens eine Reaktorrohre vorzugsweise aus einem elektrisch leitfähigen Material bzw. weist zumindest ein solches Material auf, so dass das induktive Heizen des mindestens einen Reaktorrohrs möglich ist.

Gemäß einer Ausführungsform der Erfindung ist weiterhin vorgesehen, dass der Induktor stromab einer Stelle an dem besagten Rohrabschnitt vorgesehen ist, an der der Einsatzstrom in das mindestens eine Reaktorrohr einleitbar ist, sowie stromauf (z.B. oberhalb sowie außerhalb) der besagten Brennkammer.

Gemäß einer Ausführungsform der Erfindung ist weiterhin vorgesehen, dass der Induktor eine Spule aufweist, die um den besagten Rohrabschnitt gewickelt ist.

Gemäß einer Ausführungsform der Erfindung ist weiterhin vorgesehen, dass der Induktor mit einer Energiequelle verbunden ist bzw. verbindbar ist, die in dem Induktor einen Wechselstrom erzeugt, so dass das besagte magnetische Wechselfeld erzeugt wird, das in dem besagten Rohrabschnitt Wirbelströme auslöst, die zur Erwärmung des Rohrabschnitts führen.

Gemäß einer Ausführungsform der Erfindung ist weiterhin vorgesehen, dass der besagte Rohrabschnitt dazu ausgebildet ist, ebenfalls jenen bzw. einen Katalysator aufzunehmen bzw. dass der Rohrabschnitt mit dem Katalysator befüllt ist. Das Katalysatormaterial befindet sich somit vorzugsweise nicht nur innerhalb der Brennkammer, sondern auch oberhalb der Brennkammer in dem besagten Rohrabschnitt, so dass auch dort eine Dampfreformation durchgeführt werden kann, die induktiv erzeugte Wärme verwendet. Insbesondere können die Induktoren dabei benachbart zum Katalysator angeordnet sein. So können z.B. die besagten Spulen jeweils den im jeweiligen Rohrabschnitt befindlichen Katalysator umgreifen, so dass Wärme insbesondere direkt im umgriffenen Katalysatormaterial erzeugbar ist, um dort ein Dampfreformation zu ermöglichen.

Ein weiterer Aspekt der Erfindung betrifft ein Verfahren zur Dampfreformierung gemäß Anspruch 4.

Das erfindungsgemäße Verfahren verwendet bevorzugt einen erfindungsgemäßen Ofen und kann insbesondere unter Rückgriff auf die oben beschriebenen Merkmale weitergebildet werden.

Das erfindungsgemäße Verfahren sieht vor, dass ein kohlenwasserstoffhaltiger, insbesondere methanhaltiger, sowie Wasserdampf aufweisender Einsatzstrom durch zumindest ein Reaktorrohr (oder mehrere Reaktorrohre) eines Ofens geführt wird und dort in Gegenwart eines in dem mindestens einen Reaktorrohr angeordneten, geeigneten Katalysators zu einem Rohsynthesegasstrom aufweisend CO und H₂ umgesetzt wird, wobei der Einsatzstrom in dem mindestens einen Reaktorrohr durch eine Brennkammer geführt wird, in der zum Erhitzen des Einsatzstromes ein Brennstoff verbrennbar ist bzw. verbrannt wird. Erfindungsgemäß wird dabei
- zumindest temporär der Einsatzstrom in dem mindestens einen Reaktorrohr zusätzlich erhitzt, indem das mindestens eine Reaktorrohr induktiv geheizt wird, oder
- zumindest temporär anstelle des Erhitzens des Einsatzstromes durch das Verbrennen des Brennstoffs das mindestens eine Reaktorrohr induktiv geheizt.

Weitere Merkmale und Vorteile der vorliegenden Erfindung sollen bei der Beschreibung von Ausführungsbeispielen anhand der Figuren erläutert werden. Es zeigen:

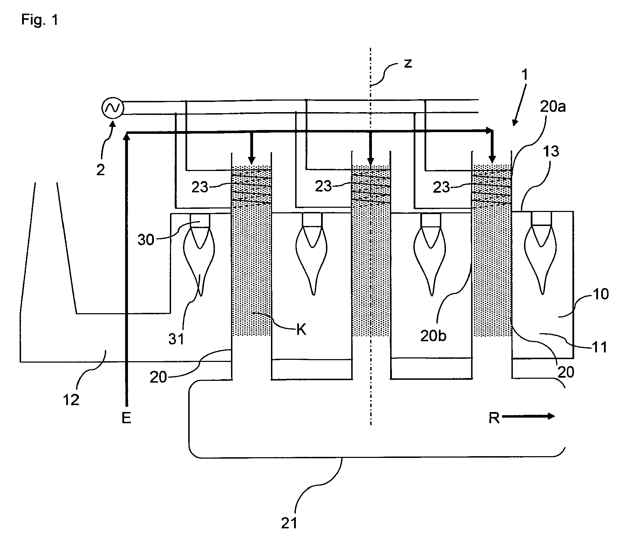

- Fig. 1: eine ausschnitthafte, perspektivische Darstellung eines erfindungsgemäßen Ofens.

Figur 1 zeigt einen erfindungsgemäßen Ofen 1 zur Dampfreformierung eines kohlenwasserstoffhaltigen Einsatzstromes E, der insbesondere Methan aufweist. Der Ofen 1 weist eine Brennkammer 10 auf, die eine Strahlungszone 11 sowie eine Konvektionszone 12 aufweist. In der Strahlungszone 11 sind z.B. an einer oberen horizontalen Wandung 13 der Brennkammer 10 Brenner 30 vorgesehen, die dazu ausgebildet sind, in der Brennkammer 10 bzw. Strahlungszone 11 einen Brennstoff in Gegenwart von Sauerstoff zu verbrennen, wobei die entstehende Wärme auf eine Mehrzahl an Reaktorrohren 20 übertragen wird (oder zumindest ein Reaktorrohr 20, siehe oben), von denen hier der Einfachheit halber lediglich drei gezeigt sind. Die Reaktorrohre 20 erstrecken sich jeweils entlang einer vertikalen Längsachse z durch die Strahlungszone 11 der Brennkammer 10. In den Reaktorrohren 20 ist ein Katalysator K vorgesehen. Dieser ist dabei sowohl in einem innerhalb der Brennkammer 10 verlaufenden Rohrabschnitt 20b des jeweiligen Reaktorrohres 20 vorgesehen also auch in einem jeweils oberhalb sowie außerhalb der Brennkammer 10 vorgesehen Rohrabschnitt 20a des jeweiligen Reaktorrohres 20.

Die in der Strahlungszone 11 erzeugte Wärme ist insbesondere so bemessen, dass der in die Reaktorrohre 20 eingeleitete Einsatzstrom E, der insbesondere zuvor in der Konvektionszone 12 des Ofens 1 bzw. der Brennkammer 10 vorgeheizt wurde, in den Reaktorrohren 20 unter Verwendung der besagten Wärme per Dampfreformierung zu einem Rohsynthesegasstrom R umgesetzt wird, der CO und H₂ aufweist.

Die Reaktorrohre 20 münden dabei in einen unterhalb der Brennkammer 10 vorgesehenen Sammler 21, über den der erzeugte Rohsynthesegasstrom R aus dem Ofen 1 bzw. den Reaktorrohren 20 abgezogen werden kann.

Das reformierte Gas R verlässt die Strahlungszone 11 des Reformerofens 1 in der Regel z.B. in einem Temperaturbereich von 780°C bis 1050 °C, bevorzugt 820 °C bis 950 °C. Der Druckbereich des Gases liegt bevorzugt im Bereich von 10 bar bis 50 bar, bevorzugt 15 bis 40 bar.

Erfindungsgemäß weist der Ofen 1 nun zusätzlich zu den Brennern 30 Induktoren 23 auf, die an den oberen Rohrabschnitten 20a angeordnet sind und dazu konfiguriert sind, die Rohrabschnitte 20a induktiv zu heizen. Die Induktoren können hierzu elektrisch leitende Spulen 23 aufweisen, die jeweils um einen zugeordneten Rohrabschnitt 20a gewickelt sind, wobei die einzelnen Induktoren bzw. Spulen 23 mit einer Energiequelle 2 verbunden sind, die in den Induktoren 23 einen Stromfluss erzeugt, der ein magnetisches Wechselfeld erzeugt, das wiederum in den Rohrabschnitten 20a Wirbelströme erzeugt, die zur Erwärmung des jeweiligen Rohrabschnittes 20a führen.

Erfindungsgemäß kann somit anstelle des Brennstoffes oder ergänzend zum Brennstoff elektrische Energie zum Heizen des Einsatzstromes E verwendet werden. Vorzugsweise handelt es sich bei der elektrischen Energie um überschüssig vorliegende Energie oder besonders preiswerte Energie.

Der erfindungsgemäße Ofen 1 eignet sich besonders zur Durchführung des erfindungsgemäßen Verfahrens. Diesbezüglich ermöglicht die technische Lehre der vorliegenden Erfindung, dass der Einsatzstrom E in den Reaktorrohren 20 z.B. temporär zusätzlich zur Feuerung erhitzt werden kann, indem in den ebenfalls mit Katalysator gefüllten Rohrabschnitten der Reaktorrohre 20 jeweils in der oben beschriebenen Weise ein elektrischer Wirbelstrom induktiv mittels der Induktoren bzw. Spulen 23 erzeugt wird. Weiterhin können insbesondere temporär anstelle der Feuerung jeweils die besagten Rohrabschnitte 20a der Reaktorrohre 20 zum Heizen des Einsatzstromes E induktiv erwärmt werden. Die Erfindung ermöglicht somit in vorteilhafter Weise die Einbeziehung von insbesondere überschüssig vorliegenden Energien sowie ggf. besonders preiswerter elektrischer Energie in den Prozess einer Dampfreformation.

**Bezugszeichenliste**

| | |
|---|---|
| 1 | Ofen |
| 2 | Energiequelle |
| 10 | Brennkammer |
| 11 | Strahlungszone |
| 12 | Konvektionszone |
| 13 | Wandung |
| 20 | Reaktorrohr |
| 20a,20b | Rohrabschnitt |
| 21 | Sammler |
| 23 | Induktor (z.B. Spule |
| R | Rohsynthesegasstrom |
| Z | Längsachse |

## Patentansprüche

1. Ofen (1) zur Dampfreformierung eines kohlenwasserstoffhaltigen Einsatzstromes (E), mit:
- einer Brennkammer (10),
- zumindest einem Reaktorrohr (20), das sich abschnittsweise in der Brennkammer (10) erstreckt und zur Aufnahme eines Katalysators (K) sowie zum Durchführen des Einsatzstromes (E) ausgebildet ist,
- zumindest einem Brenner (30), der dazu ausgebildet ist, zum Beheizen des mindestens einen Reaktorrohrs (20) einen Brennstoff in der Brennkammer (10) zu verbrennen,
**dadurch gekennzeichnet,**
**dass** das mindestens eine Reaktorrohr (20) einen oberhalb sowie außerhalb der Brennkammer (10) verlaufenden Rohrabschnitt (10a) aufweist, wobei an dem Rohrabschnitt (20a) ein Induktor (23) angeordnet ist, der dazu ausgebildet ist, den Rohrabschnitt induktiv zu heizen.

2. Ofen nach Anspruch 1, **dadurch gekennzeichnet, dass** der Induktor eine Spule (23) aufweist, die um den besagten Rohrabschnitt (20a) gewickelt ist.

3. Ofen nach Anspruch 1 oder 2, **dadurch gekennzeichnet, dass** der besagte Rohrabschnitt (20a) dazu ausgebildet ist, ebenfalls den Katalysator (K) aufzunehmen, oder dass der Rohrabschnitt (20a) mit dem Katalysator (K) befüllt ist.

4. Verfahren zur Dampfreformierung, insbesondere unter Verwendung eines Ofens (1) nach einem der vorhergehenden Ansprüche, wobei ein kohlenwasserstoffhaltiger sowie Wasserdampf aufweisender Einsatzstrom (E) durch zumindest ein Reaktorrohr (20) eines Ofens (1) geführt wird und dort in Gegenwart eines in dem mindestens einen Reaktorrohr (20) angeordneten Katalysators (K) zu einem Rohsynthesegasstrom (R) umgesetzt wird, wobei der Einsatzstrom (E) in dem mindestens einen Reaktorrohr (20) durch eine Brennkammer (10) geführt wird, in der zum Erhitzen des Einsatzstromes (E) ein Brennstoff verbrannt wird,
**dadurch gekennzeichnet,**
- **dass** zumindest temporär der Einsatzstrom (E) in dem mindestens einen Reaktorrohr (20) zusätzlich erhitzt wird, indem das mindestens eine Reaktorrohr (20) induktiv geheizt wird, oder dass
- zumindest temporär anstelle des Erhitzens des Einsatzstromes (E) durch das Verbrennen des Brennstoffs das mindestens eine Reaktorrohr (20) induktiv geheizt wird.
